# EUROPÄISCHE PATENTSCHRIFT

(11) **EP 0 879 024 B1**
(45) Veröffentlichungstag und Bekanntmachung des Hinweises auf die Patenterteilung: **29.09.1999**
(21) Anmeldenummer: 97900923.0
(22) Anmeldetag: 31.01.1997
(51) Int. Cl.: A61C 9/00

(54) **ABDRUCKSYSTEM FÜR EINEN AUS DER MENSCHLICHEN GEWEBESTRUKTUR AUSTRETENDEN IMPLANTATABSCHLUSS**
IMPRESSION SYSTEM FOR AN END OF AN IMPLANT PROJECTING FROM A HUMAN TISSUE STRUCTURE
SYSTEME D'EMPREINTE POUR EXTREMITE D'IMPLANT EMERGEANT D'UNE STRUCTURE TISSULAIRE HUMAINE

(30) Priorität: 08.02.1996 CH 32696
(43) Veröffentlichungstag der Anmeldung: 25.11.1998
(73) Patentinhaber: Institut Straumann AG, 4437 Waldenburg (CH)
(72) Erfinder: GRANDE, Vincenzo, CH-4313 Möhlin (CH); BAUMGARTNER, Reto, CH-4402 Frenkendorf (CH); TSCHIRKY, Roger, CH-4107 Ettingen (CH)
(74) Vertreter: Ullrich, Gerhard, Dr.
(86) Internationale Anmeldenummer: CH9700031
(87) Internationale Veröffentlichungsnummer: WO9728755

(56) Entgegenhaltungen:
- DE-A- 4 415 670
- SCHROEDER, SUTTER, BUSER, KREKELER: "ORALE IMPLANTOLOGIE" 1994 , 2. AUFL. THIEME VERLAG , STUTTGART, DE XP002012099 in der Anmeldung erwähnt siehe Seite 202 - Seite 209

## Beschreibung

### Anwendungsgebiet der Erfindung

Die vorliegende Erfindung betrifft ein Abdrucksystem mit einer Abdruckkappe für ein in den menschlichen Körper eingesetztes Implantat zur Übertragung des aus der Gewebestruktur austretenden Implantatabschlusses, inklusive möglicher Aufbauten auf diesem Implantatabschluss, auf ein Meistermodell.

### Stand der Technik

Die folgende Erörterung bezieht sich zunächst beispielhaft auf Dentalimplantate. Bisher benutzt man zur Abformung der Situation im Mund des Patienten und zur Übertragung des gewonnenen Abdrucks auf ein Meistermodell - auf diesem wird dann der Zahnersatz modelliert - eine Reihe von Elementen. Die bis dato durchzuführenden Arbeitsschritte und dabei benutzten Elemente sind eingehend dargestellt bei SCHROEDER, A.; SUTTER, F.; BUSER, D.; KREKELER, G.: Orale Implantologie. Georg Thieme Verlag Stuttgart, 2. Aufl. 1994, S. 202 ff. Einerseits ist das Zusammensetzen der Elemente im Mund des Patienten, insbesondere im Bereich der Molaren - wegen der sich ergebenden Gesamthöhe der Elemente - problematisch, zumal wenn noch ein Schraubinstrument benutzt werden muss. Des weiteren sind die Arbeitsabläufe für den Patienten anstrengend sowie bei der Abdrucknahme und der Meistermodellherstellung zeitaufwendig. Überdies stellen sich Ungenauigkeiten ein.

Die Schwierigkeiten ergeben sich vorrangig dadurch, dass die Abdruckkappe nicht selbst auf dem im Mund eingesetzten Implantat bzw. auf dem später bei der Meistermodellherstellung zu verwendenden Manipulierimplantat hält. Aus der DE 44 15 670 A1 ist eine Abdruckkappe bekannt, die am offenen, zum Implantat gerichteten Ende, federnde Laschen aufweist, welche im aufgesteckten Zustand über die Schulter des konischen Aufbauteils - dies ist in das Implantat eingesetzt - greifen. Die hier beschriebene Abdruckkappe ist somit zur Abdrucknahme des aus der Gingiva austretenden, in den Mund ragenden Implantatabschlusses nicht benutzbar, sondern nur zur Abformung der Aussenkontur des Aufbauteils, während das Implantat subgingival positioniert ist.

### Aufgabe der Erfindung

Angesichts der bisher aufwendigen und teils ungenauen Abdrucknahme und Meistermodellherstellung sowie der nur bedingt verwendbaren Abdruckkappen liegt der Erfindung das Problem zugrunde, ein Abdrucksystem mit einer Abdruckkappe zu schaffen, welches zur Übertragung eines aus der menschlichen Gewebestruktur austretenden Implantatabschlusses - auf diesem kann sich ein Aufbauteil befinden - auf ein Meistermodell geeignet ist. Hierbei muss die Abdruckkappe, eingebettet in der im Abdrucklöffel vorhandenen Abdruckmasse, vom eingesetzten Implantat abziehbar sein und das Manipulierimplantat ebenso fest aufnehmen können. Die Abdruckkappe soll für die verschiedensten Typen von Implantaten benutzbar sein, auch wenn darin unterschiedlichste Pfeiler, z.B. gerade oder abgewinkelte, konische oder einen Vielkantkopf aufweisende, massive oder mit Innengewinde versehene Pfeiler, eingesetzt sind.

### Wesen der Erfindung

Das Abdrucksystem beinhaltet als wesentlichen Bestandteil eine Abdruckkappe zur Übertragung eines aus einer menschlichen Gewebestruktur austretenden Abschlusses eines in den Humankörper eingesetzten Implantats, inklusive möglicher Aufbauten, auf ein Meistermodell. Das nach aussen gerichtete Implantatende weist an seiner Aussenseite eine hinterschnittene Kontur auf, und die Abdruckkappe besitzt eine zur hinterschnittenen Kontur komplementäre, darin eingreifende Geometrie. Die hinterschnittene Kontur wird entweder durch eine zum Implantatlager hin sich trompetenförmig verjüngende Implantatgeometrie oder durch eine Aussparung, nahe dem Implantatabschluss, gebildet.

Vorteilhaft ist die an der Abdruckkappe vorgesehene, eingreifende Geometrie ein Schnappelement in Form einer zirkulären Lippe, oder sie wird von einzelnen Greiforganen gebildet. In einer speziellen Ausgestaltung ist der Implantatabschluss trompetenförmig, und er hat im Bereich des grössten Durchmessers eine abgewinkelte Schulterpartie in Form einer Implantatschulter. Auf der Implantatschulter stützt sich die an der Abdruckkappe vorgesehene Kappenschulter zumindest partiell ab.

Am äusseren Umfang kann die Abdruckkappe durch radiale Einfurchung erzeugte Retentionsteller und/oder radial gerichtete Durchbrüche besitzen. Auf einer Seite ist die Abdruckkappe geschlossen, oder sie weist einen axialen Durchgangskanal auf. Entweder bleibt der Durchgangskanal der Abdruckkappe frei, oder es ist darin der Pfeiler eines Aufbauteils und/oder eine Schieberhülse einsetzbar. Die Schieberhülse besitzt eine zum Pfeiler komplementäre Innenkontur, und zumindest der untere Ausläufer des Hülsenstücks der Schieberhülse sitzt zwischen dem Pfeiler und der Innenwandung der auf der Implantatschulter ruhenden Abdruckkappe. Für die Übertragung des von der Originalsituation gewonnenen Abdrucks auf ein Meistermodell sind zu dieser Originalsituation analoge, vorgefertigte Teile vorgesehen.

Die Implantatschulter wird durch eine Manipulierschulterhülse mit einer oben gelegenen Manipulierschulter und mit einem Haltemechanismus - möglicherweise in Form einer Rastkante - verkörpert, und die Manipulierschulter wird vom Schnappelement der Abdruckkappe umfasst. Für die Übertragung des von der Originalsituation gewonnenen Abdrucks auf ein Meistermodell ist ein in die im gewonnenen Abdruck verbliebene Abdruckkappe und Schieberhülse einschiebbarer Pfeiler eines Manipulierimplantats vorgesehen. Dieser einschiebbare Pfeiler ist in seiner äusseren Kontur formidentisch zu dem in der Originalsituation real verwendeten Pfeiler.

Mit Vorteil ist am Manipulierimplantat unterhalb des Pfeilers ein Fortsatz mit Retentionstellern und einem zum Haltemechanismus komplementären Fixierorgan angeordnet, wobei der Haltemechanismus der Manipulierschulterhülse mit dem Fixierorgan des Manipulierimplantats zusammenwirkt.

Dank der Erfindung steht nun ein Abdrucksystem mit einer Abdruckkappe zur Verfügung, mit welchem die Abdrucknahme eines aus der Gewebestruktur des Patienten austretenden Implantatabschlusses mit dem eventuellen Aufbauteil sowie die Meistermodellherstellung sehr vereinfacht werden. Zudem ist nun die Übertragung der realen, am Patienten vorhandenen, geometrischen Situation auf das Meistermodell präziser.

### Kurzbeschreibung der beigefügten Zeichnungen

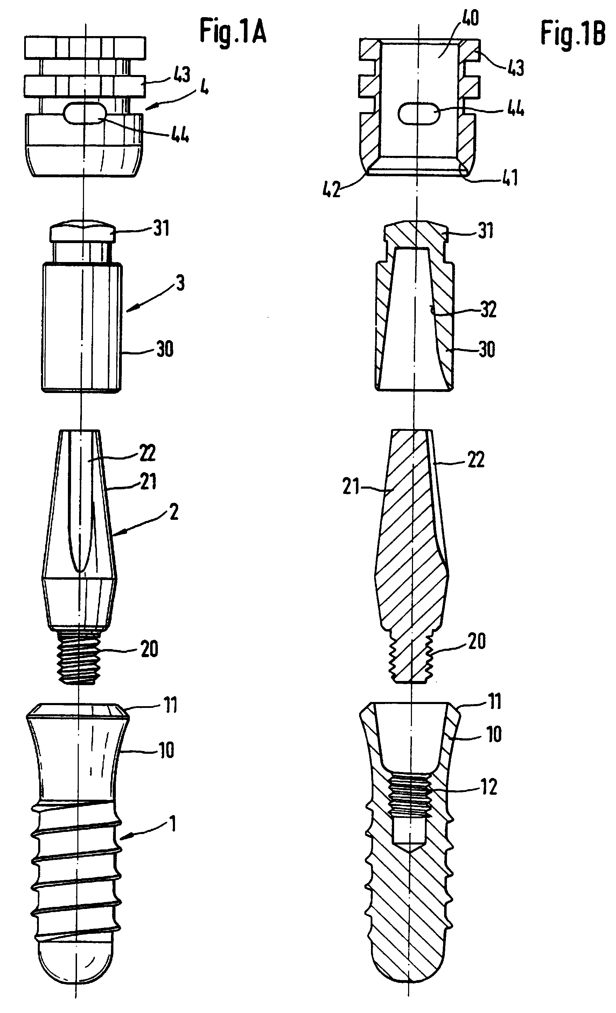

- Figur 1A:: ein Vollschraubenimplantat mit einem Konus-Massivaufbauteil, eine Schieberhülse und die Abdruckkappe in der Explosivdarstellung;
- Figur 1B:: die Darstellung gemäss Figur 1A im Vertikalschnitt;

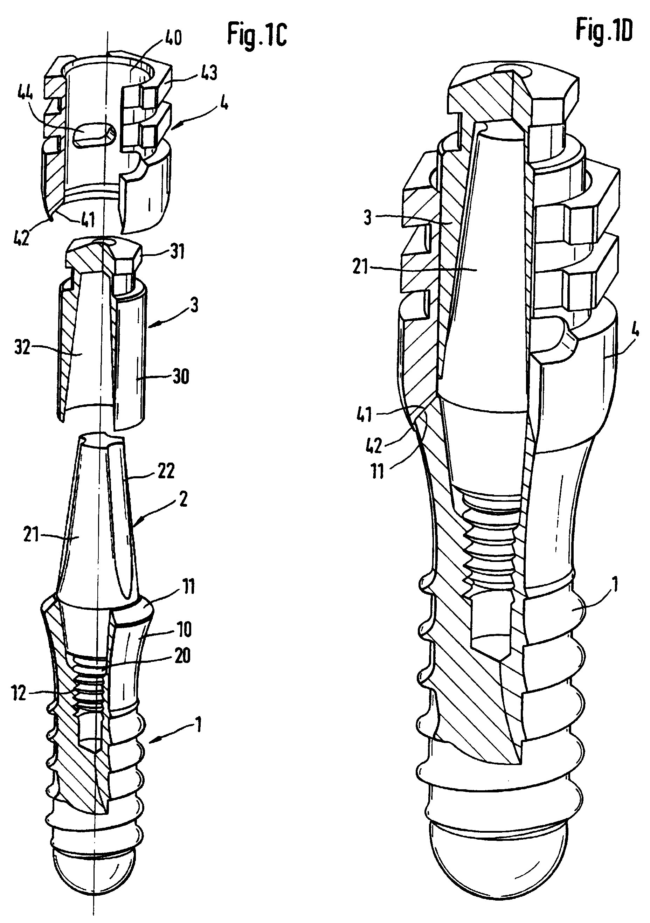

- Figur 1C:: die Darstellung gemäss Figur 1A mit eingeschraubtem Konus-Massivaufbauteil im Teilschnitt;
- Figur 1D:: die Elemente gemäss Figur 1A im zusammengefügten Zustand als Teilschnitt;

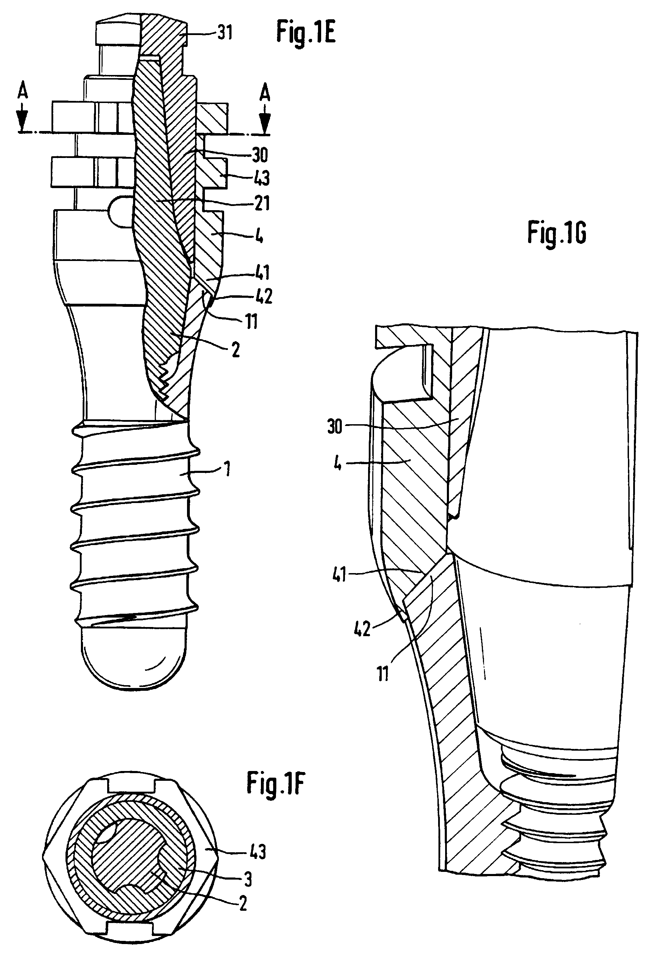

- Figur 1E:: die Darstellung gemäss Figur 1D in einem anderen Teilschnitt;
- Figur 1F:: die Darstellung gemäss Figur 1E als Schnitt auf der Linie A-A;
- Figur 1G:: als Detail den Bereich mit dem um die Implantatschulter greifenden Schnappelement im Teilschnitt;

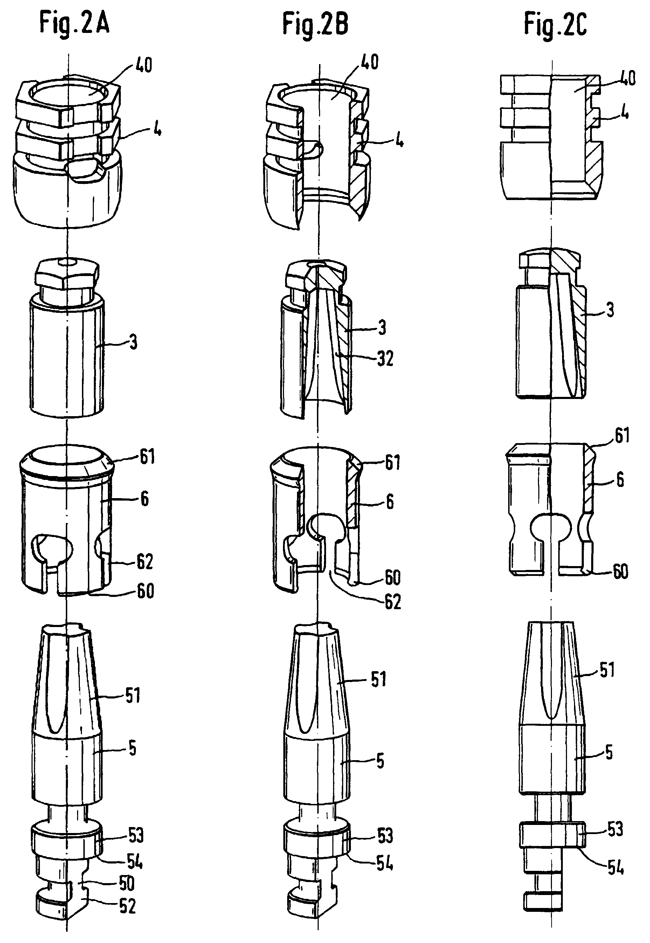

- Figur 2A:: ein Manipulierimplantat mit Konus-Massivteil, eine Manipulierschulterhülse, eine Schieberhülse und die Abdruckkappe in der Explosivdarstellung;
- Figur 2B:: die Darstellung gemäss Figur 2A im vertikalen Teilschnitt;
- Figur 2C:: die Darstellung gemäss Figur 2B in einem anderen vertikalen Teilschnitt;
- Figur 2D:: die Elemente gemäss Figur 2A im zusammengefügten Zustand;

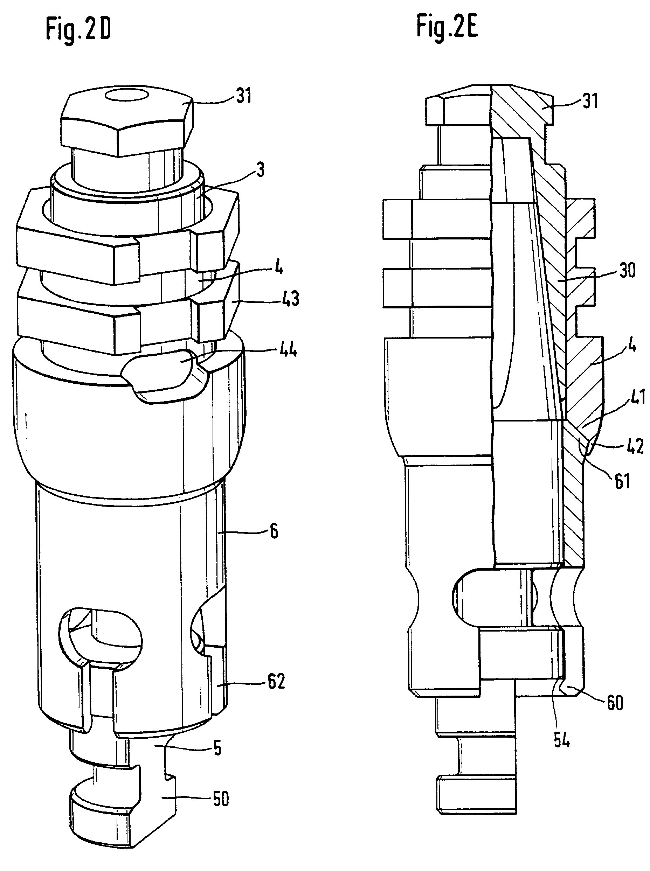

- Figur 2E:: die Darstellung gemäss Figur 2D im vertikalen Teilschnitt;

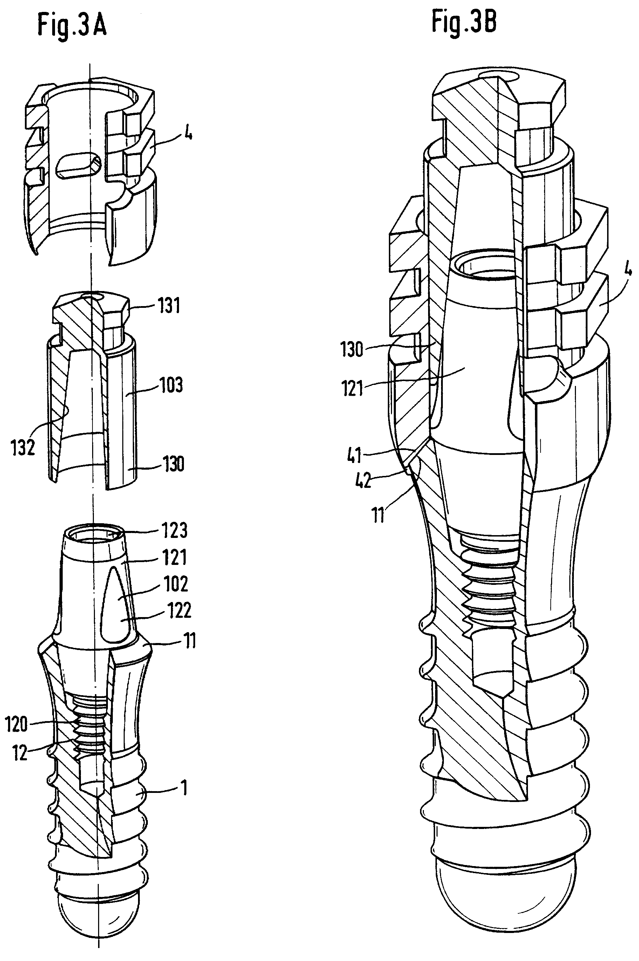

- Figur 3A:: ein Vollschraubenimplantat mit einem Konus-Aufbauteil (6°) mit Innengewinde, eine Schieberhülse und die Abdruckkappe in der Explosivdarstellung;
- Figur 3B:: die Elemente gemäss Figur 3A im zusammengefügten Zustand, im vertikalen Teilschnitt;

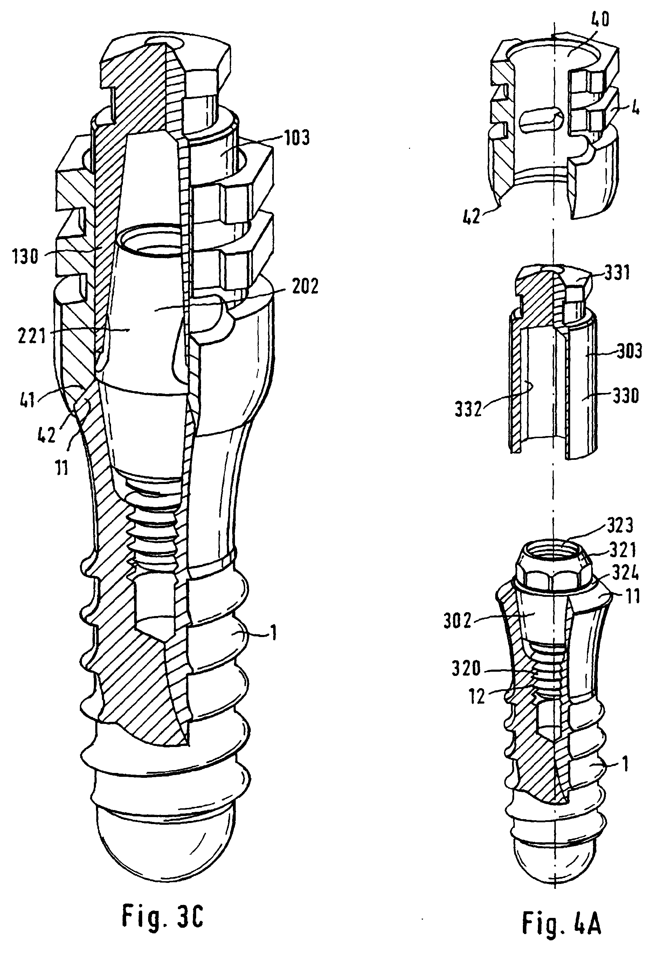

- Figur 3C:: die Darstellung gemäss Figur 3B mit einem Konus-Aufbauteil (8°);
- Figur 4A:: ein Vollschraubenimplantat mit einem VielkantAufbauteil, eine Schieberhülse und die Abdruckkappe als Explosivdarstellung im vertikalen Teilschnitt;

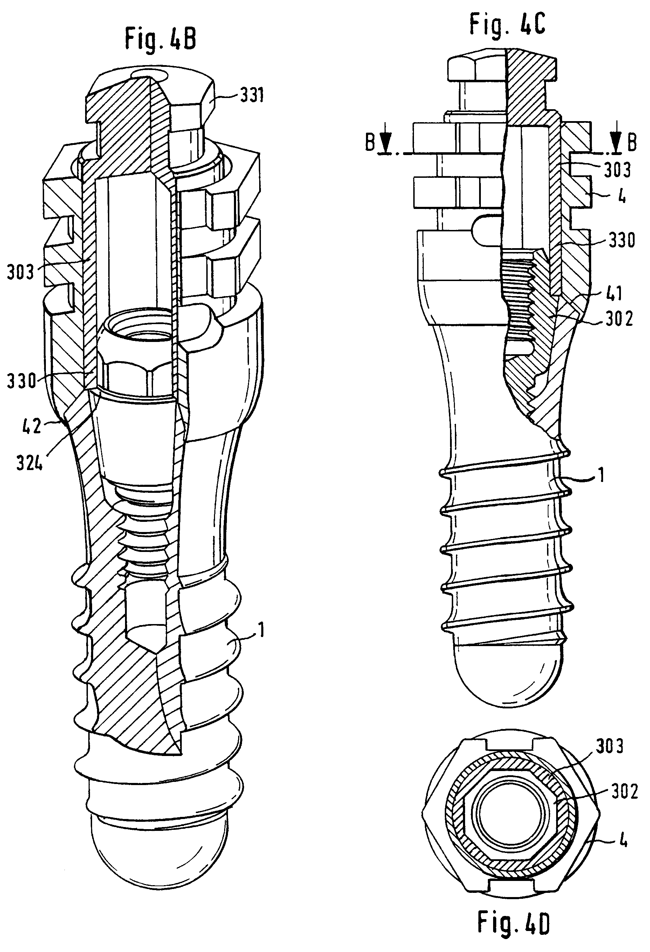

- Figur 4B:: die Elemente gemäss Figur 4A im zusammengefügten Zustand, im vertikalen Teilschnitt;
- Figur 4C:: die Darstellung gemäss Figur 4B in einem anderen vertikalen Teilschnitt;
- Figur 4D:: die Darstellung gemäss Figur 4C als Schnitt auf der Linie B-B;
- Figur 5A:: Mundsituation mit im Kieferknochen sitzenden Vollschraubenimplantat und eingesetztem Konus-Massivaufbauteil;
- Figur 5B:: die Darstellung gemäss Figur 5A mit aufgeschobener Schieberhülse;
- Figur 5C:: die Darstellung gemäss Figur 5B mit aufgeschobener Abdruckkappe;
- Figur 5D:: die Darstellung gemäss Figur 5C mit aufgesetztem Abdrucklöffel;
- Figur 5E:: der gemäss Figur 5D gewonnene Abdruck;
- Figur 5F:: das an den Abdruck gemäss Figur 5E angesetzte Konus-Massivaufbauteil;
- Figur 5G:: die Darstellung gemäss Figur 5F mit angesetzter Manipulierschulterhülse;
- Figur 5H:: die Darstellung gemäss Figur 5G mit abgezogenem Abdrucklöffel;
- Figur 6A:: die Darstellung gemäss Figur 5A mit abgewinkeltem Konus-Aufbauteil;
- Figur 6B:: die Darstellung gemäss Figur 6A mit aufgeschraubtem Abformzylinder;
- Figur 6C:: die Darstellung gemäss Figur 6B mit aufgeschobener, lateral offener Abdruckkappe;
- Figur 6D:: die Darstellung gemäss Figur 6C mit aufgesetztem Abdrucklöffel;
- Figur 6E:: den Abdruck gemäss Figur 6D;
- Figur 6F:: die Darstellung gemäss Figur 6E mit angesetzter Manipulierschulterhülse;
- Figur 6G:: die Darstellung gemäss Figur 6F mit aufgefüllter Abdruckkappe und
- Figur 6H:: die Darstellung gemäss Figur 6G als fertiges Meistermodell.

### Ausführungsbeispiele

Anhand der beiliegenden Zeichnungen erfolgt nachstehend die detaillierte Beschreibung von Ausführungsbeispielen des erfindungsgemässen Abdrucksystems, wobei abschliessend mögliche Modifikationen erwähnt sind.

Für die gesamte Beschreibung gilt folgende Festlegung. Sind in einer Figur zum Zweck zeichnerischer Eindeutigkeit Bezugsziffern enthalten, aber im unmittelbar zugehörigen Beschreibungstext nicht erläutert, so wird auf deren Erwähnung in vorangehenden Figurenbeschreibungen Bezug genommen. Im Interesse der Übersichtlichkeit wird auf die wiederholte Bezeichnung von Bauteilen in nachfolgenden Figuren zumeist verzichtet, sofern zeichnerisch eindeutig erkennbar ist, dass es sich um "wiederkehrende" Bauteile handelt.

### Figuren 1A bis 1G

Ohne die Erfindung darauf beschränken zu wollen, bezieht sich das Beispiel weiterhin auf die Abdrucknahme an einem im Mund des Patienten eingesetzten Implantat **1** - hier ein Dentalimplantat als Vollschraube. Das Implantat **1** besitzt einen sich konisch aufwärts erweiternden Implantatkopf **10** sowie eine sich aufwärts konisch verengende Implantatschulter **11**. In das Implantat **1** wird ein Aufbauteil - hier ein Konus-Massivaufbauteil **2** - mit seinem Gewindeteil **20** in die Innengewindebohrung **12** des Implantats **1** eingeschraubt. Der die Implantatschulter **11** überragende Pfeiler **21** des Konus-Massivaufbauteils **2** weist äusserlich mehrere vertikal verlaufende Nuten **22** auf. Insoweit sind die Teile an sich bekannt.

Zur Abdrucknahme wird eine Schieberhülse **3** benutzt, die sich in ein nach unten offenes Hülsenstück **30** und ein oben abschliessendes, geschlossenes Endstück **31** gliedert. Das zylindrische Hülsenstück **30** ist aussen glatt, während es eine zum Pfeiler **21** komplementäre Innenkontur **32** aufweist und auf diesen aufschiebbar ist.

Die Abdruckkappe **4** ist im Prinzip zylindrisch und beiderseits offen. Der durch die Abdruckkappe **4** verlaufende Durchgangskanal **40** ist zur Aussenform des Hülsenstücks **30** komplementär, so dass die Abdruckkappe **4** über die Schieberhülse **3** gleitend geschoben werden kann. Zuunterst besitzt die Abdruckkappe **4** eine Kappenschulter **41**, die zur Implantatschulter **11** komplementär ist. Aussen umläuft die Kappenschulter **41** ein nach innen gewandtes, elastisches Schnappelement **42**. Am äusseren Umfang ist die Abdruckkappe **4** radial gefurcht, so dass mehrere Retentionsteller **43** entstehen. In der Abdruckkappe **4** können sich Durchbrüche **44** zum Entweichen der Luft und zum Eindringen bzw. Einbringen von Abdruckmasse befinden. Die Retentionsteller **43** haben die Funktion der Verankerung in der Abdruckmasse, um das Verschieben bzw. Verdrehen der Abdruckkappe **4** zu vermeiden.

Im zusammengefügten Zustand reicht die auf den Pfeiler **21** aufgeschobene Schieberhülse **3** mit dem Hülsenstück **30** bis fast zur Implantatschulter **11**. Die Abdruckkappe **4** nimmt in ihrem Durchgangskanal **40** das Hülsenstück **30** auf, wobei das Endstück **31** aus der Abdruckkappe **4** oben herausragt. Die Innenkontur **32** der Schieberhülse **3** schmiegt sich an die Aussenkontur des Pfeilers **21**. Insbesondere der untere Auslauf des Hülsenstücks **30** wirkt als verklemmender Keil zwischen dem Pfeiler **21** und der Abdruckkappe **4**. Die Kappenschulter **41** sitzt praktisch fugenlos und unter Federspannung auf der Implantatschulter **11**, wobei das Schnappelement **42** die Implantatschulter **11** in Abwärtsrichtung, hin zum Implantatkopf **10**, umfasst und quasi die Abdruckkappe **4** auf das Implantat **1** zieht.

### Figuren 2A bis 2E

Diese Zeichnungsfolge gehört zur Herstellung des Meistermodells, nachdem man den Abdruck der Mundsituation gewonnen hat. Vorhanden sind wiederum die zuvor beschriebene Schieberhülse **3** und Abdruckkappe **4**, welche im Abdruck eingebettet bleiben. Bei dieser Arbeitsphase kommen ein Manipulierimplantat **5** - hier mit einem massiven, konischen Pfeiler **51** - sowie eine Manipulierschulterhülse **6** hinzu.

Das Manipulierimplantat **5** besitzt unten einen Fortsatz **50** und oben einen zum Pfeiler **21** identischen Pfeiler **51**. Über dem Fortsatz **50** mit mehreren Retentionstellern **52** weist das Manipulierimplantat **5** einen Fixierteller **53** mit einer Tellerschulter **54** auf.

Die zylindrische, hohle Manipulierschulterhülse **6** weist unten eine radial umlaufende, elastische, nach innen gewölbte Rastkante **60** auf. Oben schliesst die Manipulierschulterhülse **6** mit einer zur Implantatschulter **11** identischen Manipulierschulter **61** ab. In der Manipulierschulterhülse **6** sind zur Rastkante **60** sich erstreckende Dehnungsschlitze **62** zur Erhöhung der Elastizität vorgesehen. Im zusammengefügten Zustand ist die Manipulierschulterhülse **6** soweit auf das Manipulierimplantat **5** geschoben, dass die Rastkante **60** den Fixierteller **53** umgreift, während das Schnappelement **42** der Abdruckkappe **4** die Manipulierschulter **61** elastisch umgreift. Die Schieberhülse **3** klemmt weiterhin keilförmig in der Abdruckkappe **4**.

### Figuren 3A und 3B

In Abwandlung zur Figurenfolge 1A bis 1G wird hier anstelle des Konus-Massivaufbauteils **2** ein Konus-Aufbauteil **102** mit einem Innengewinde **123** gezeigt. Das Gewindeteil **120** greift in die Innengewindebohrung **12** des Implantats **1** ein. Der konische Pfeiler **121** mit den Nuten **122** und z.B. einer Konizität von 6° hat eine andere Aussengeometrie; entsprechend ist eine angepasste Schieberhülse **103** mit zum Pfeiler **121** komplementärer Innenkontur **132** vorgesehen. Zuunterst hat das Hülsenstück **130** eine Innenkontur mit 6° Konizität; welche dann in eine 8° Konizität übergeht.

Im zusammengefügten Zustand umgreift das Schnappelement **42** wieder die Implantatschulter **11**, und der untere Ausläufer des Hülsenstücks **130** schiebt sich keilförmig klemmend zwischen den Pfeiler **121** und die Abdruckkappe **4**. Das Endstück **131** der Schieberhülse **103** ragt oben aus der Abdruckkappe **4**. Das hier anzuwendende Manipulierimplantat müsste einen zum Pfeiler **121** identischen Pfeiler aufweisen.

### Figur 3C

Es ist ein erneut abgeändertes Konus-Aufbauteil **202** im Einsatz; dieses weist z.B. eine Konizität von 8° am Pfeiler **221** auf. Mit den zwei abgestuften Konizitäten von 6° und 8° im Hülsenstück **130** ist die Schieberhülse **103** hier ebenfalls verwendbar.

### Figuren 4A bis 4D

Nun ist ein Vielkant-Aufbauteil **302** mit seinem Gewindeteil **320** in die Innengewindebohrung **12** des Implantats **1** eingeschraubt. Der vielkantige Pfeiler **321** - hier mit einem Aussenachtkant - überragt die Implantatschulter **11**, während die den Pfeiler **321** radial umlaufende, horizontale Pfeilerschulter **324** etwa - je nach Toleranzen - mit der Oberkante der Implantatschulter **11** abschliesst. Axial erstreckt sich in das Vielkant-Aufbauteil **302** eine sacklochförmige Innengewindebohrung **323**. Vorhanden ist eine Schieberhülse **303** mit zum Pfeiler **321** passender Innenkontur **332** am Hülsenstück **330**.

Im zusammengefügten Zustand setzt der untere Ausläufer des Hülsenstücks **330** auf die Pfeilerschulter **324** auf und das Endstück **331** ragt wieder oben aus der Abdruckkappe **4** heraus. Das Schnappelement **42** der Abdruckkappe **4** umgreift die Implantatschulter **11**.

### Figuren 5A bis 5H

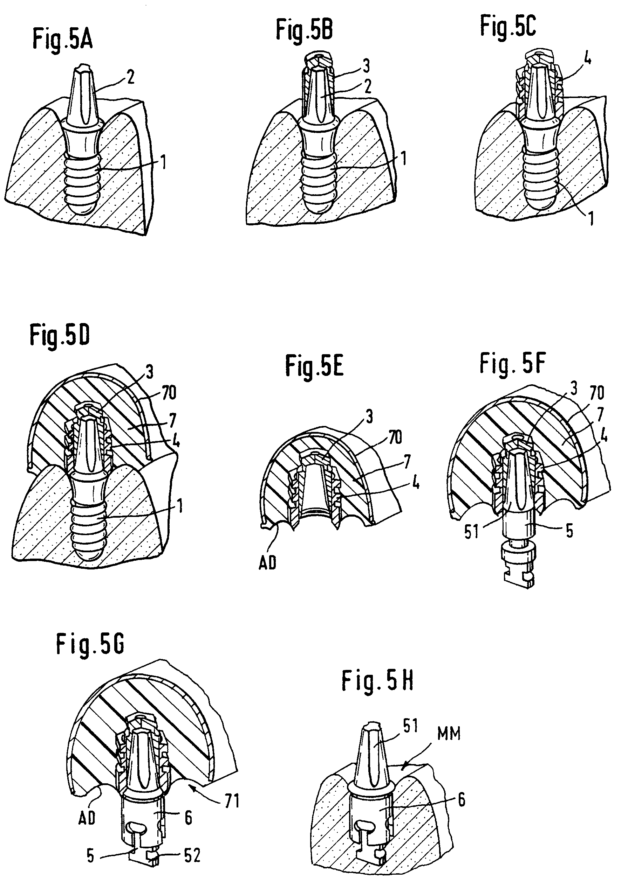

Diese Figurenfolge skizziert die Arbeitsabfolge von der Abdrucknahme - am Beispiel eines Konus-Massivaufbauteils **2** -bis zum fertigen Meistermodell. Die Mundsituation (Fig. 5A) ist mit einem im Kieferknochen sitzenden Implantat **1** und darin eingeschraubtem Konus-Massivaufbauteils **2** gegeben. Zur Abdrucknahme wird zunächst die Schieberhülse **3** auf das Konus-Massivaufbauteils **2** aufgeschoben (Fig. 5B). In einem weiteren Schritt wird die Abdruckkappe **4** aufgeschoben (Fig. 5C). Die Abfolge zwischen dem Aufschieben der Schieberhülse **3** und der Abdruckkappe **4** könnte auch in umgekehrter Reihenfolge geschehen. Nun wird der mit Abdruckmasse **7** gefüllte Abdrucklöffel **70** auf das soweit bestückte Implantat **1** gegen den Kieferknochen gedrückt (Fig. 5D). Nach dem Abziehen des Abdrucklöffels **70** verbleiben die Abdruckkappe **4** sowie die Schieberhülse **3** in der Abdruckmasse **7** eingebettet, und man erhält den Abdruck **AD** (Fig. 5E).

Jetzt wird ein analoges Manipulierimplantat **5** mit seinem konischen Pfeiler **51** in die Schieberhülse **3** bis zum Anschlag eingeschoben (Fig. 5F). Schliesslich wird die Manipulierschulterhülse **6** über die Retentionsteller **52** des Manipulierimplantats **5** geschoben, bis dessen Manipulierschulter **61** vom Schnappelement **42** erfasst ist, wobei die Rastkante **60** an die Tellerschulter **54** anstösst (Fig. 5G). Zuletzt giesst man an den Abdruck **AD** Modellmasse **71** an und erhält das Meistermodell **MM** (Fig. 5H). Es ist auch denkbar, die Manipulierschulterhülse **6** vor dem Manipulierimplantat **5** einzufügen.

### Figuren 6A bis 6H

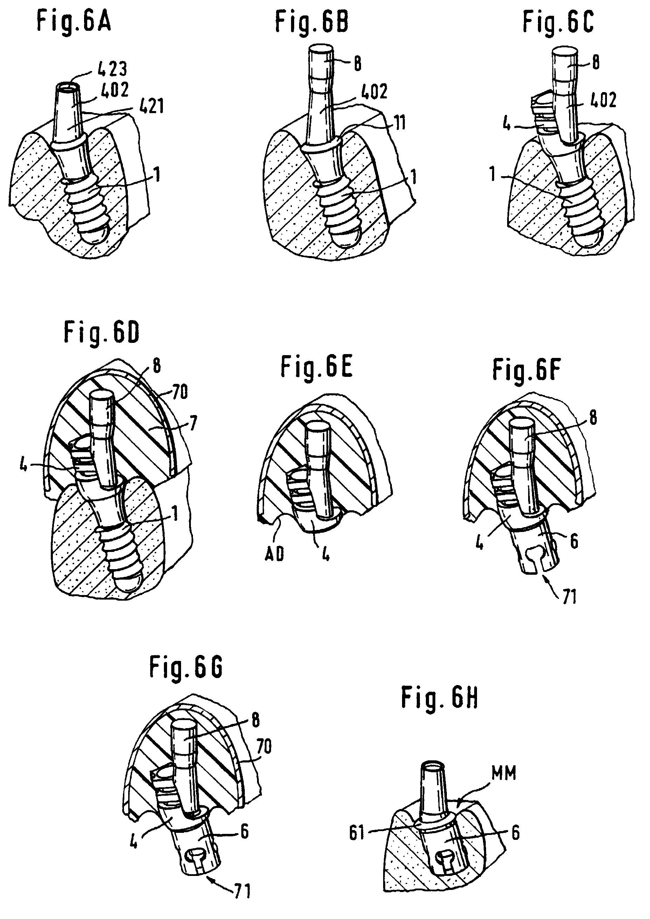

Diese Figurenfolge skizziert die Arbeitsabfolge am Beispiel eines abgewinkelten Konus-Aufbauteils **402** mit einem Innengewinde **423**, wobei der Gewindeteil **420** in die Innengewindebohrung **12** im Implantat **1** eingeschraubt ist; dies ist die Mundsituation (Fig. 6A). In das Innengewinde **423** wird ein Abformzylinder **8** eingeschraubt (Fig. 6B) und darauf eine lateral offene Abdruckkappe **4** aufgeschoben, die sich an der Implantatschulter **11** verkrallt (Fig. 6C). Mit dem mit Abdruckmasse **7** gefüllten Abdrucklöffel **70** wird der Abdruck **AD** genommen (Fig. 6D), den man nach Abziehen des Abdrucklöffels **70** erhält, in dem nun die Abdruckkappe **4** und ein Hohlraum gemäss dem Abformzylinder **8** und des Konus-Aufbauteil **402** zurückbleiben (Fig. 6E). Im nächsten Schritt schiebt man den Abformzylinder **8** in seinen Hohlraum und setzt die Manipulierschulterhülse **6** an (Fig. 6F) und füllt dann Modellmasse **71** durch die Manipulierschulterhülse **6** ein, so dass der gesamte Hohlraum ausgefüllt wird (Fig. 6G). Nun wird an den Abdruck **AD** Modellmasse **71** angegossen und nach dem Abziehen des Abdrucklöffels **70**, in welchem der Abformzylinder **8** verbleibt, erhält man das fertige Meistermodell **MM** (Fig. 6H).

Zum vorbeschriebenen Abdrucksystem sind weitere konstruktive Variationen realisierbar. Hier ausdrücklich erwähnt seien noch:
- Die Schieberhülse **3** kann gänzlich entfallen, wenn man den in der Abdruckkappe **4** verbliebenen Hohlraum, den der ausgewählte Pfeiler - z.B. **21** - innerhalb der Abdruckkappe **4** belässt, mit Abdruckmasse füllt. Das Einbringen der Abdruckmasse könnte durch die Durchbrüche **44** geschehen.
- Fertigungstechnisch kann es vorteilhaft sein, die Schieberhülse **3** und die Abdruckkappe **4** zu vereinen und einteilig zu gestalten.
- Es ist praktizierbar, das Manipulierimplantat **5** und die Manipulierschulterhülse **6** zu vereinen und einteilig zu gestalten.
- Die bisherige in der Beschreibung gemachte Aufzählung von Pfeilern **21,131,221,321,421** ist keinesfalls abschliessend. Auch darüber hinausgehende Pfeilerformen gelten als einbezogen.
- Die Manipulierschulterhülse **6** kann, wie die Abdruckkappe **4**, am äusseren Umfang durch radiale Einfurchung erzeugte Retentionsteller und/oder radial gerichtete Durchbrüche aufweisen.
- Das Manipulierimplantat 5 und/oder die Manupulierschulterhülse **6** können gänzlich entfallen, wenn man den im Abdruck **AD** verbliebenen Hohlraum mit Modellmaterial auffüllt.
- Der Erfindungsgedanke lässt sich dahin generalisieren, dass die an der Abdruckkappe **4** vorgesehenen Schnappelemente **42** allgemein eine Eingriffsgeometrie haben können, welche in die am nach aussen gerichteten Implantatende, an seiner Aussenseite vorhandene, hinterschnittene Kontur, eingreifen. Die Kontur kann durch eine Trompetenform des Implantatendes oder durch eine eingearbeitete Hinterschneidung geschaffen werden.

## Patentansprüche

1. Abdrucksystem mit einer Abdruckkappe (**4**) zur Übertragung eines aus einer menschlichen Gewebestruktur austretenden Abschlusses eines in den Humankörper eingesetzten Implantats (**1**), inklusive möglicher Aufbauten - nachstehend als Situation (**S**) bezeichnet -, auf ein Meistermodell (**MM**), wobei
a) das nach aussen gerichtete Implantatende an seiner Aussenseite eine hinterschnittene Kontur aufweist, dadurch gekennzeichnet, dass
b) die Abdruckkappe (4) eine zur hinterschnittenen Kontur komplementäre, darin eingreifende Geometrie aufweist.

2. Abdrucksystem nach Anspruch 1, dadurch gekennzeichnet, dass die hinterschnittene Kontur entweder durch eine zum Implantatlager hin sich trompetenförmig verjüngende Implantatgeometrie oder durch eine Aussparung, nahe dem Implantatabschluss, gebildet wird.

3. Abdrucksystem nach Anspruch 1 oder 2, dadurch gekennzeichnet**,** dass die an der Abdruckkappe (**4**) vorgesehene, eingreifende Geometrie ein Schnappelement (**42**) in Form einer zirkulären Lippe oder von einzelnen Greiforganen darstellt.

4. Abdrucksystem nach Anspruch 2, dadurch gekennzeichnet, dass der trompetenförmige Implantatabschluss im Bereich des grössten Durchmessers eine abgewinkelte Schulterpartie - die Implantatschulter (**11**) - aufweist, auf welcher sich die an der Abdruckkappe (**4**) vorgesehene Kappenschulter (**41**) zumindest partiell abstützt.

5. Abdrucksystem nach Anspruch 1, dadurch gekennzeichnet, dass die Abdruckkappe (**4**) am äusseren Umfang durch radiale Einfurchung erzeugte Retentionsteller (**43**) und/oder radial gerichtete Durchbrüche (**44**) aufweisen kann.

6. Abdrucksystem nach Anspruch 1, dadurch gekennzeichnet, dass die Abdruckkappe (**4**) auf einer Seite geschlossen ist oder einen axialen Durchgangskanal (**40**) aufweist.

7. Abdrucksystem nach Anspruch 6, dadurch gekennzeichnet, dass der Durchgangskanal (**40**) der Abdruckkappe (**4**) frei bleibt oder darin ein Pfeiler (**21, 121,221,321**) und/oder eine Schieberhülse (**3,103,303**) eingesetzt wird.

8. Abdrucksystem nach Anspruch 7, dadurch gekennzeichnet, dass die Schieberhülse (**3,103,303**) eine zum Pfeiler (**21,121,221,321**) komplementäre Innenkontur (**32,132, 332**) besitzt und zumindest der untere Ausläufer des Hülsenstücks (**30,130,330**) der Schieberhülse (**3,103,303**) zwischen dem Pfeiler (**21,121,221,321**) und der Innenwandung der auf der Implantatschulter (**11**) ruhenden Abdruckkappe (**4**) sitzt.

9. Abdrucksystem nach Anspruch 1, dadurch gekennzeichnet, dass für die Übertragung des von der Situation (**S**) gewonnenen Abdrucks (**AD**) auf ein Meistermodell (**MM**) zu dieser Situation (**S**) analoge, vorgefertigte Teile vorgesehen sind.

10. Abdrucksystem nach Anspruch 4, dadurch gekennzeichnet, dass die Implantatschulter (**11**) durch eine Manipulierschulterhülse (**6**) mit einer oben gelegenen Manipulierschulter (**61**) und mit einem Haltemechanismus - möglicherweise in Form einer Rastkante (**60**) - verkörpert wird, wobei die Manipulierschulter (**61**) von dem Schnappelement (**42**) der Abdruckkappe (**4**) umfasst wird.

11. Abdrucksystem nach Anspruch 1, dadurch gekennzeichnet, dass für die Übertragung des von der Situation (**S**) gewonnenen Abdrucks (**AD**) auf ein Meistermodell (**MM**) ein in die im gewonnenen Abdruck (**AD**) verbliebene Abdruckkappe (**4**) und Schieberhülse (**3,103,303**) einschiebbarer Pfeiler (**51**) eines Manipulierimplantats (**5**) vorgesehen ist, welcher in seiner äusseren Kontur formidentisch zu dem in der Situation (**S**) real verwendeten Pfeiler (**21,121,221,321**) ist.

12. Abdrucksystem nach Anspruch 11, dadurch gekennzeichnet, dass am Manipulierimplantat (**5**) unterhalb des Pfeilers (**51**) ein Fortsatz (**50**) mit Retentionstellern (**52**) und einem zum Haltemechanismus (**60**) komplementären Fixierorgan (**53**) angeordnet ist.

13. Abdrucksystem nach Anspruch 12, dadurch gekennzeichnet, dass der Haltemechanismus (**60**) der Manipulierschulterhülse (**6**) mit dem Fixierorgan (**53**) des Manipulierimplantats (**5**) zusammenwirkt.

## Claims

1. Impression system with an impression cap (**4**) for transferring, to a master cast (**MM**), an end, protruding from a human tissue structure, of an implant (**1**) which is fitted in the human body, including possible superstructures, hereinafter referred to as situation (**S**), where
a) the outwardly directed implant end has an undercut contour on its outside, characterized in that
b) the impression cap (**4**) has a geometry which complements the undercut contour and engages therein.

2. Impression system according to claim 1, characterized in that the undercut contour is formed either by an implant geometry tapering in a trumpet shape towards the implant bed, or by a recess near the implant end.

3. Impression system according to claim 1 or 2, characterized in that the engaging geometry provided on the impression cap (**4**) is a snap element (**42**) in the form of a circular lip, or it is formed by individual gripping members.

4. Impression system according to claim 2, characterized in that the trumpet-shaped implant end has an angled shoulder portion, the implant shoulder (**11**), in the area of greatest diameter, and the cap shoulder (**41**) provided on the impression cap (**4**) is supported at least partially on the implant shoulder (**11**).

5. Impression system according to claim 1, characterized in that, on the outer circumference, the impression cap (**4**) can have retention plates (**43**) generated by radial grooving and/or radially directed apertures (**44**).

6. Impression system according to claim 1, characterized in that the impression cap (**4**) is closed on one side or has an axial channel passage (**40**).

7. Impression system according to claim 6, characterized in that the channel passage (**40**) of the impression cap (**4**) remains free, or an abutment (**21,121,221,321**) and/or a slide sleeve (**3,103,303**) is fitted therein.

8. Impression system according to claim 7, characterized in that the slide sleeve (**3,103,303**) has an inner contour (**32,132,332**) complementing the abutment (**21,121,221,321**), and at least the lower edge of the sleeve section (**30,130,330**) of the slide sleeve (**3,103,303**) sits between the abutment (**21,121,221,321**) and the inner wall of the impression cap (**4**) resting on the implant shoulder (**11**).

9. Impression system according to claim 1, characterized in that for transferring the impression (**AD**) obtained from the situation (**S**) to a master cast (**MM**), prefabricated parts analogous to this situation (**S**) are provided.

10. Impression system according to claim 4, characterized in that the implant shoulder (**11**) is embodied by a manipulation shoulder sleeve (**6**) with an upper manipulation shoulder (**61**) and with a holding mechanism, possibly in the form of a locking edge (**60**), and the manipulation shoulder (**61**) is gripped by the snap element (**42**) of the impression cap (**4**).

11. Impression system according to claim 1, characterized in that for transferring the impression (**AD**) obtained from the situation (**S**) to a master cast (**MM**), an abutment (**51**) of a manipulation implant (**5**) is provided which can be pushed into the impression cap (**4**) and slide sleeve (**3,103,303**) remaining in the impression (**AD**) obtained, which abutment (**51**), in terms of its outer contour, is identical in shape to the abutment (**21,121,221,321**) actually used in the situation (**S**).

12. Impression system according to claim 11, characterized in that underneath the abutment (**51**), the manipulation implant (**5**) is provided with a continuation (**50**) having retention plates (**52**) and a fixing member (**53**) complementing the holding mechanism (**60**).

13. Impression system according to claim 12, characterized in that the holding mechanism (**60**) of the manipulation shoulder sleeve (**6**) cooperates with the fixing member (**53**) of the manipulation implant (**5**).

## Revendications

1. Système de prise d'empreinte comprenant un couvercle de prise d'empreinte (4) pour le transfert d'une terminaison sortant d'une structure tissulaire humaine d'un implant (1) inséré dans le corps humain, incluant des superstructures éventuelles - représenté ci-après en tant que situation (S) - sur un maître-modèle (MM), dans lequel
a) l'extrémité de l'implant dirigée vers l'extérieur présente sur son extérieur un contour en contre-dépouille, caractérisé en ce que
b) le couvercle de prise d'empreinte (4) présente une géométrie complémentaire du contour en contre-dépouille, venant en engagement dans celui-ci.

2. Système de prise d'empreinte selon la revendication 1, caractérisé en ce que le contour en contre-dépouille est formé soit par une géométrie d'implant se rétrécissant en trompette jusqu'au support de l'implant, soit par un évidement près de la terminaison de l'implant.

3. Système de prise d'empreinte selon la revendication 1 ou 2, caractérisé en ce que la géométrie prévue et venant en engagement sur le couvercle de prise d'empreinte (4) constitue un élément d'encliquetage (42) en forme de lèvre circulaire ou d'éléments de saisie individuels.

4. Système de prise d'empreinte selon la revendication 2, caractérisé en ce que la terminaison de l'implant en forme de trompette dans la région du plus grand diamètre présente une partie d'épaulement repliée - l'épaulement (11) de l'implant - sur laquelle s'appuie au moins partiellement l'épaulement (41) du couvercle prévu sur le couvercle de prise d'empreinte (4).

5. Système de prise d'empreinte selon la revendication 1, caractérisé en ce que le couvercle de prise d'empreinte (4) peut présenter, sur son pourtour extérieur, des disques de rétention (43) produits par sillonnage radial, et/ou des interruptions (44) orientées radialement.

6. Système de prise d'empreinte selon la revendication 1, caractérisé en ce que le couvercle de prise d'empreinte (4) est fermé d'un côté ou présente un canal de traversée axial (40).

7. Système de prise d'empreinte selon la revendication 6, caractérisé en ce que le canal de traversée (40) du couvercle de prise d'empreinte (4) reste libre ou en ce qu'un pilier (21, 121, 221, 321) et/ou un manchon coulissant (3, 103, 303) est inséré dans celui-ci.

8. Système de prise d'empreinte selon la revendication 7, caractérisé en ce que le manchon coulissant (3, 103, 303) possède un contour interne (32, 132, 332) complémentaire de celui du pilier (21, 121, 221, 321) et au moins la sortie inférieure de la pièce de manchon (30, 130, 330) du manchon coulissant (3, 103, 303) repose entre le pilier (21, 121, 221, 321) et la paroi interne du couvercle de prise d'empreinte (4) reposant sur l'épaulement (11) de l'implant.

9. Système de prise d'empreinte selon la revendication 1, caractérisé en ce que pour le transfert de l'empreinte (AD) obtenue par la situation (S) sur un maître-modèle (MM) de cette situation (S), des pièces analogues, préfabriquées, sont prévues.

10. Système de prise d'empreinte selon la revendication 4, caractérisé en ce que l'épaulement (11) de l'implant est représenté par un manchon (6) à épaulement de manipulation avec un épaulement de manipulation (61) placé dans la partie supérieure et avec un mécanisme de fixation - éventuellement en forme d'arête d'encliquetage (60) -, l'épaulement de manipulation (61) étant entouré par l'élément d'encliquetage (42) du couvercle de prise d'empreinte (4).

11. Système de prise d'empreinte selon la revendication 1, caractérisé en ce que pour le transfert de l'empreinte (AD) obtenue par la situation (S) sur un maître-modèle (MM), on prévoit un pilier (51) d'un implant de manipulation (5) insérable dans le couvercle de prise d'empreinte (4) restant dans l'empreinte obtenue (AD) et dans le manchon coulissant (3, 103, 303), lequel pilier a une forme identique dans son contour extérieur au pilier (21, 121, 221, 321) utilisé en réalité dans la situation (S).

12. Système de prise d'empreinte selon la revendication 11, caractérisé en ce qu'un prolongement (50) avec des disques de rétention (52) et un organe de fixation (53) complémentaire du mécanisme de fixation (60) est disposé à l'implant de manipulation (5) sous le pilier (51).

13. Système de prise d'empreinte selon la revendication 12, caractérisé en ce que le mécanisme de fixation (60) du manchon (6) à épaulement de manipulation coopère avec l'organe de fixation (53) de l'implant de manipulation (5).
